# EUROPEAN PATENT APPLICATION

(11) **EP 4 683 085 A1**
(43) Date of publication of application: **21.01.2026**
(21) Application number: 24891754.4
(22) Date of filing: 12.11.2024
(51) Int. Cl.: H01M 50/383, H01M 50/317, H01M 50/342, H01M 50/289, H01M 50/367, H01M 50/249

(54) **BATTERY PACK AND VEHICLE INCLUDING SAME**

(30) Priority: 17.11.2023 KR 20230159746
(71) Applicant: LG Energy Solution, Ltd., Seoul 07335 (KR)
(72) Inventor: LEE, Jung-Hoon, Daejeon 34122 (KR); KIM, Soo-Youl, Daejeon 34122 (KR); JUNG, Hye-Mi, Daejeon 34122 (KR); HAN, Min-Hee, Daejeon 34122 (KR)
(74) Representative: Plasseraud IP
(86) International application number: PCT/KR2024/017865
(87) International publication number: WO 2025/105808

(57) **Abstract**

The present disclosure relates to a battery pack including: a pack case having an inner space formed therein and a venting path configured to communicate the inner space and the outer space; and a battery module accommodated in the inner space of the pack case and including a plurality of battery cells, a module case configured to accommodate the plurality of battery cells and having a venting hole formed to discharge venting gas generated from the battery cell to the outside, and an opening/closing member configured to open and close the venting hole and cause the venting hole to communicate with the venting path when opened.

## Description

### TECHNICAL FIELD

The present disclosure relates to a battery pack and a vehicle including the same.

This application is based on and claims priority from Korean Patent Application No. 10-2023-0159746, filed on November 17, 2023, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. When a higher output voltage is required, a battery module or battery pack may be configured by connecting a plurality of battery cells in series. In addition, a battery module or battery pack may be configured by connecting multiple battery cells in parallel to increase the charge/discharge capacity. Accordingly, the number of battery cells included in the battery module or pack may be set in various ways depending on the required output voltage or charge/discharge capacity.

Meanwhile, since battery cells undergo chemical reactions during charging and discharging, their performance may deteriorate if they are used at a temperature higher than an appropriate temperature, and if the heat fails to be controlled at the appropriate temperature, unexpected ignition or explosion is more likely to occur. Therefore, if a thermal event such as thermal runaway occurs inside the battery pack, high-temperature gas or flame emitted from the battery cells therein may spread to adjacent battery modules, causing a chain reaction of explosions in the battery modules, which is very dangerous.

Therefore, it is necessary to develop a structure capable of minimizing the thermal energy transferred to adjacent battery modules and preventing or suppressing the propagation of thermal runaway between battery modules when thermal runaway occurs in the battery module.

In addition, it is also necessary to develop a structure capable of quickly discharging high-temperature gases or flames generated in a battery module to the outside of the battery pack when thermal runaway occurs in the battery module, thereby dissipating heat accumulation inside the battery pack.

### DISCLOSURE

### Technical Problem

The present disclosure is designed to solve the problems of the related art, and therefore the present disclosure is directed to providing a battery pack capable of minimizing the thermal energy transferred to adjacent battery modules when thermal runaway occurs in a battery module, thereby preventing or suppressing thermal runaway propagation between the battery modules.

The present disclosure is also to provide a vehicle that includes such a battery pack.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a pack case having an inner space formed therein and a venting path formed to communicate the inner space and the outer space; and a battery module accommodated in the inner space of the pack case and including a plurality of battery cells, a module case configured to accommodate the plurality of battery cells and having a venting hole formed to discharge venting gas generated from the battery cell to the outside, and an opening/closing member configured to open and close the venting hole and cause the venting hole to communicate with the venting path when opened.

The opening/closing member may be configured to cover the venting hole, and the venting hole may be opened by the venting gas.

At least a portion of the opening/closing member may be configured to be movable toward the inside of the venting path by the venting gas.

The pack case may include a cross-beam configured to partition the inner space and having the venting path formed therein.

The opening/closing member may be provided on a side surface of the module case facing the cross-beam.

The opening/closing member may be configured to guide the venting gas in one direction of the venting path when opened.

The pack case may have a plurality of inlets formed to face the venting hole and configured so that the venting gas flows into the venting path.

The opening/closing member may be configured to at least partially cover an inlet formed on another battery module when moved.

The pack case may include a partition configured to partition the venting path into a plurality of parts and having a partition hole formed thereon, and the opening/closing member is configured to cover the partition hole when moved.

The pack case may further include a cover member configured to cover the inlet and to cause the inlet to be opened by the opening/closing member.

The cover member may be configured to be movable by the opening/closing member.

The cover member may be configured to be broken by the opening/closing member.

In another aspect of the present disclosure, there is provided a vehicle including a battery pack according to the present disclosure.

### Advantageous Effects

According to one aspect of the present disclosure, it is possible to minimize the thermal energy transferred to adjacent battery modules when thermal runaway occurs in a battery module. Therefore, the propagation of thermal runaway between battery modules is able to be prevented or suppressed, thereby ensuring the safety and reliability of the battery pack.

In addition, according to another aspect of the present disclosure, since high-temperature gas or flame is quickly discharged to the outside of the battery pack, heat accumulation inside the battery pack is able to be resolved.

In addition, according to another aspect of the present disclosure, it is possible to prevent or delay events due to thermal runaway of a device equipped with a battery pack, such as fire or explosion.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery pack according to an embodiment of the present disclosure.
FIG. 2 is an exploded perspective view of a battery pack according to an embodiment of the present disclosure.
FIG. 3 is a partially cross-sectional view of a battery pack to which an opening/closing member is applied according to an embodiment of the present disclosure.
FIG. 4 is a drawing illustrating an operation in which the opening/closing member is opened when a thermal event occurs in the battery pack in FIG. 3.
FIG. 5 is a cross-sectional view of a battery pack according to an embodiment of the present disclosure, which may be a cross-section view taken along line I - I' in FIG. 1.
FIG. 6 is a partially cross-sectional view of a battery pack to which an opening/closing member is applied according to another embodiment of the present disclosure.
FIG. 7 is a drawing illustrating an operation in which the opening/closing member is opened when a thermal event occurs in the battery pack in FIG. 6.
FIG. 8 is a drawing illustrating an operation in which the opening/closing member is opened when a thermal event occurs in the battery pack in FIG. 6 according to another embodiment.
FIG. 9 is a partially cross-sectional view of a battery pack according to an embodiment of the present disclosure.
FIG. 10 is a drawing illustrating an operation in which the opening/closing member is opened when a thermal event occurs in the battery pack in FIG. 9.
FIG. 11 is a partially cross-sectional view of a battery pack according to another embodiment of the present disclosure.
FIG. 12 is a drawing illustrating an operation in which the opening/closing member is opened when a thermal event occurs in the battery pack in FIG. 11.
FIG. 13 is a partially cross-sectional view of a battery pack to which a cover member is applied according to an embodiment of the present disclosure.
FIG. 14 is a drawing illustrating an operation in which the cover member is opened when a thermal event occurs in the battery pack in FIG. 13.
FIG. 15 is a drawing illustrating an operation in which the cover member is opened when a thermal event occurs in the battery pack in FIG. 13 according to another embodiment.
FIG. 16 is a schematically perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back directions are used in this specification, it is obvious to those skilled in the art to which the present disclosure pertains that these terms are only for convenience of explanation with reference the relevant drawings and may vary depending on the position, arrangement, or rotation of the target object or the position of the observer.

For example, in the embodiment of the present disclosure, the X-axis direction shown in the drawing may indicate a front-back direction, the Y-axis direction may indicate a left-right direction perpendicular to the X-axis direction on the horizontal plane (X-Y plane), and the Z-axis direction may indicate an up-down direction (vertical direction) perpendicular to both the X-axis direction and the Y-axis direction.

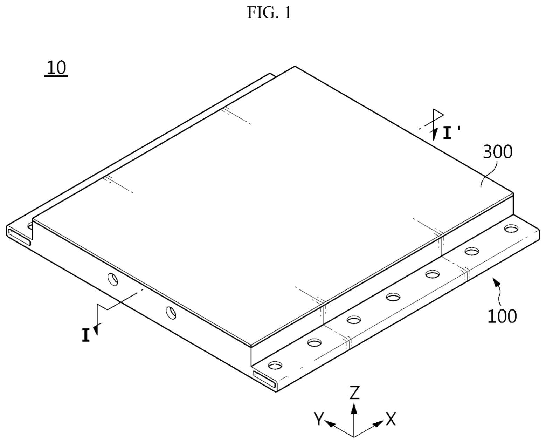

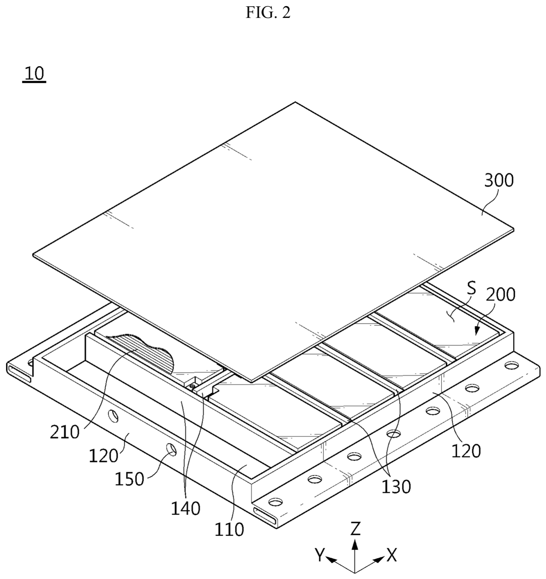

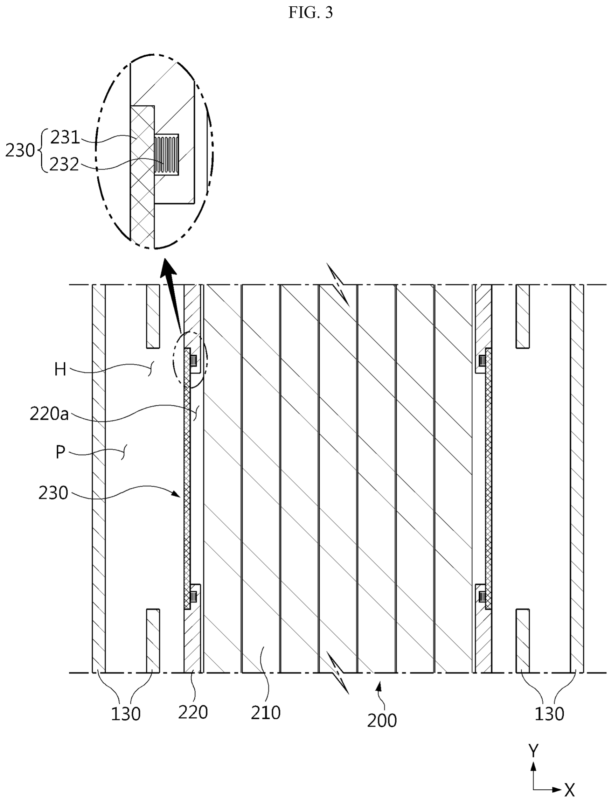

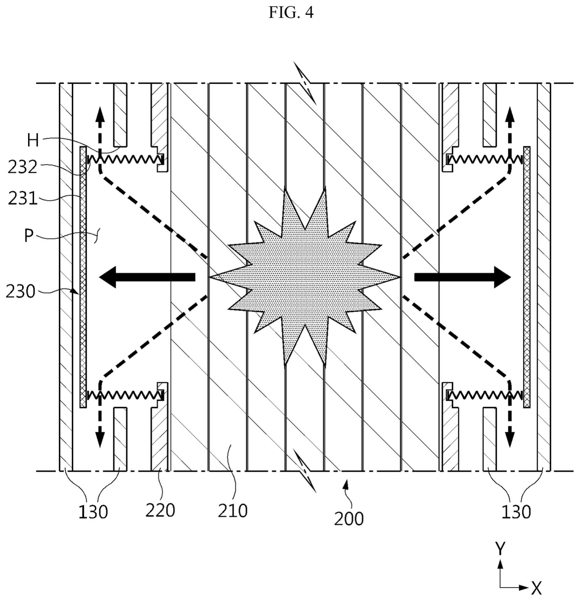

FIG. 1 is a perspective view of a battery pack according to an embodiment of the present disclosure. FIG. 2 is an exploded perspective view of a battery pack according to an embodiment of the present disclosure. FIG. 3 is a partially cross-sectional view of a battery pack to which an opening/closing member is applied according to an embodiment of the present disclosure. In addition, FIG. 4 is a drawing illustrating an operation in which the opening/closing member is opened when a thermal event occurs in the battery pack in FIG. 3.

Referring to FIGS. 1 to 4, a battery pack 10 according to an embodiment of the present disclosure includes a pack case 100 and a battery module 200.

The pack case 100 may be configured to form an inner space S. The pack case 100 may be made of a material that may secure mechanical strength, such as a metal such as steel or SUS, or a plastic, in order to safely protect the battery module 200 accommodated therein, or may include such a material.

In addition, the pack case 100 may include a venting path P. The venting path P may indicate a passage through which venting gas or the like flows. The venting path P may be configured to connect the inner space S and the outer space of the pack case 100.

The venting path P may be formed inside the pack case 100. Here, the inside of the pack case 100 may indicate a predetermined space separately provided inside the pack case 100, or may indicate a hollow space formed in a plurality of beams or plates constituting the pack case 100, as illustrated in FIG. 3.

The battery module 200 may be configured to be accommodated in the inner space S of the pack case 100. The pack case 100 may have a plurality of accommodation spaces configured to accommodate a plurality of battery modules 200 partitioned.

A plurality of battery modules 200 may be disposed adjacent to each other in the front-back direction and/or left-right direction in multiple rows. For example, as illustrated in FIG. 2, the plurality of battery modules 200 may be disposed in four rows along the front-back direction (X-axis direction) and in two rows along the left-right direction (Y-axis direction).

The battery module 200 may include a plurality of battery cells 210, a module case 220, and an opening/closing member 230.

Referring to FIG. 2, a plurality of battery cells 210 may be included. Although not illustrated in the drawings, the plurality of battery cells 210 may include an electrode assembly, a cell case that accommodates the electrode assembly, and an electrode lead that is connected to the electrode assembly and extends outward from the cell case to function as an electrode terminal. In this case, the plurality of battery cells 210 may be electrically connected to each other.

The battery cell 210 may be a pouch-type secondary battery. The cell case of such a pouch-type secondary battery may be configured in a pouch in which a metal layer made of aluminum is interposed between polymer layers.

The plurality of battery cells 210 may be disposed side by side along the front-back direction (X-axis direction) while standing in the vertical direction (Z-axis direction), as shown in FIG. 2.

Meanwhile, the present disclosure is not limited to a specific type or shape of the battery cell 210, and various battery cells 210 known at the time of filing the present disclosure may be applied to the battery pack 10 of the present disclosure. In the present embodiment, although a pouch-type secondary battery with high energy density and easy stacking will be described as shown in the drawing, it is obvious that a cylindrical or prismatic secondary battery may also be applied to the battery cell 210.

The module case 220 may be configured to have an empty space formed inside so that at least some of the plurality of battery cells 210 may be accommodated in the inner space. That is, the module case 220 may group the plurality of battery cells 210 according to multiple battery modules 200, and may be a physical boundary of the inner spaces of the respective battery modules 200.

In addition, although not shown in the drawing, the battery module 200 may include a bus-bar assembly and/or a module terminal electrically connected to the plurality of battery cells 210 accommodated inside.

A venting hole 220a may be formed in the module case 220. The venting hole 220a may be configured to discharge venting gas generated in the battery cells 210 accommodated inside the module case 220 to the outside of the module case 220.

Specifically, the venting hole 220a may be provided in the module case 220 to enable directional venting in a specific direction. In particular, the venting hole 220a may be provided on one surface of the module case 220 facing the venting path P.

According to the above-implemented configuration of the present disclosure, the venting gas or the like released through the venting hole 220a may directly move to the venting path P formed in the pack case 100, so that the venting gas or the like may be discharged more quickly to the outside of the pack case 100.

Meanwhile, the opening/closing member 230 may be configured to open and close the venting hole 220a. The opening/closing member 230 may be provided on one surface of the module case 220 where the venting hole 220a is formed. As illustrated in FIG. 3, the opening/closing member 230 may be configured to cover the venting hole 220a.

In addition, as illustrated in FIG. 4, the opening/closing member 230 may be configured to open the venting hole 220a when a thermal event occurs. Specifically, the opening/closing member 230 may be configured such that the venting hole 220a is opened by the venting gas generated when a thermal event occurs in the battery cell 210. When the opening/closing member 230 is opened, the venting hole 220a may communicate with the venting path P. Accordingly, when the opening/closing member 230 is opened, the venting gas discharged through the venting hole 220a may flow into the venting path P formed inside the pack case 100.

According to the above-implemented configuration of the present disclosure, when thermal runaway occurs in the battery cell 210, high-temperature gas or flames generated from each battery module 200 may be independently discharged to the outside, so that thermal propagation to the battery cells 210 provided in other battery modules 200 may be minimized. That is, according to the above-implemented configuration of the present disclosure, even if a thermal event occurs in any battery module 200, it may be prevented from affecting other battery modules 200. Accordingly, thermal runaway propagation may be prevented or suppressed inside the battery pack 10, so that the safety and reliability of the battery pack 10 may be guaranteed.

In addition, according to the above-implemented configuration of the present disclosure, venting gas or the like generated from the battery cell 210 may be introduced into the venting path P through the venting hole 220a and quickly discharged to the outside of the pack case 100. Accordingly, heat accumulation within the battery pack 10 may be dissipated.

More specifically, referring to FIG. 4, the opening/closing member 230 may be configured to be movable at least in part by the venting gas. The opening/closing member 230 may be configured to be movable in its entirety or in part.

The opening/closing member 230 may move toward the inside of the venting path P. Specifically, the opening/closing member 230 may move toward the inside of the venting path P by the pressurizing force of the venting gas discharged through the venting hole 220a provided in the battery module 200 where the thermal event occurs.

As an example, the opening/closing member 230 may include a cover plate 231 configured in the form of a plate, and an elastic member 232 connected to the cover plate 231. The cover plate 231 may be made of a material having heat resistance and/or fire resistance. The cover plate 231 may be configured to be movable in one direction by the venting gas while covering the venting hole 220a.

In this case, the elastic member 232 may be configured to control the movement of the cover plate 231. That is, the cover plate 231 may move in one direction by the elastic force of the elastic member 232 and the pressurizing force of the venting gas. In addition, the opening/closing member 230 may be configured to return by the elastic force of the elastic member 232 when the discharge of the venting gas stops, thereby covering the venting hole 220a.

As another embodiment, although not shown in the drawing, the opening/closing member 230 may be configured to be elastically deformed at least in part by the venting gas. In this case, both ends of the opening/closing member 230 may be configured to be fixed to the module case 220. In addition, the cover plate 231 of the opening/closing member 230 may be configured as an elastic pad or the like. According to the above embodiment, when venting gas flows into the venting path P through the venting hole 220a, the central part of the cover plate 231 may be elastically deformed by the pressure of the venting gas to move to open the venting hole 220a.

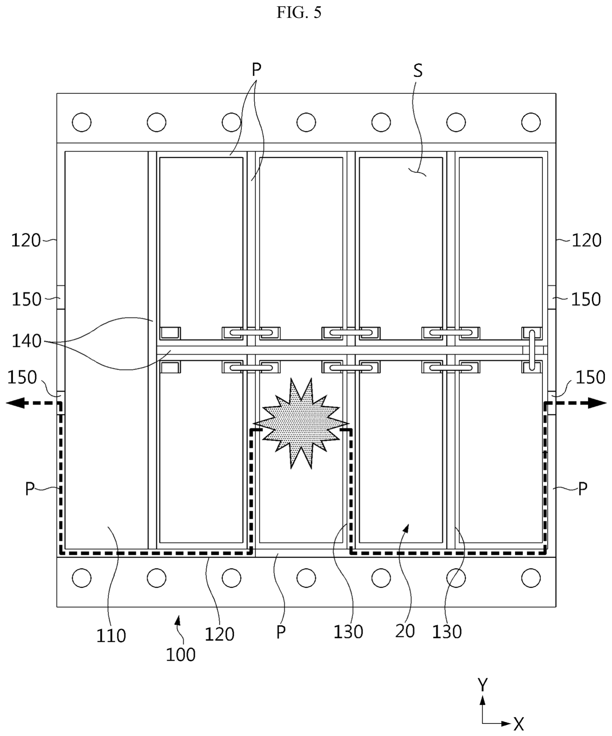

FIG. 5 is a cross-sectional view of a battery pack according to an embodiment of the present disclosure, which may be a cross-section view taken along line I - I' in FIG. 1.

Meanwhile, referring to FIGS. 2 and 5, the pack case 100 may include a base frame 110 and a plurality of side frames 120.

The base frame 110 may be configured such that a plurality of battery cells 210 are seated thereon. The base frame 110 may form the lower surface of the pack case 100 and may be configured as a rectangular plate. In addition, the base frame 110 may be provided with a flat upper surface so that the module case 120 may be stably seated.

The plurality of side frames 120 may be configured to extend upward from the respective edges of the base frame 110. The plurality of side frames 120 may be provided to surround the plurality of battery cells 210. More specifically, the plurality of side frames 120 may be configured as a right wall located at the end of the base frame 110 in the -Y-axis direction, a rear wall located at the end in the +X-axis direction, a left wall located at the end in the +Y-axis direction, and a front wall located at the end in the -X-axis direction, respectively, thereby forming the side surfaces of the pack case 100.

In addition, the pack case 100 may include center beams 140. The center beam 140 may be provided to connect the side frames 120 facing each other among the plurality of side frames 120. For example, as shown in FIG. 5, at least one of the center beams 140 may be configured to extend in the left-right direction to connect the right wall and the left wall of the side frames 120.

In addition, the center beams 140 may be configured to partition a plurality of battery modules 200 arranged in multiple rows. For example, the center beam 140 may be provided between the battery modules 200 arranged in two rows in the left-right direction. Accordingly, the plurality of battery modules 200 may be provided to be spaced apart from each other by the center beams 140.

In addition, the pack case 100 may include cross-beams 130. The cross-beams 130 may be configured to partition the inner space of the pack case 100. For example, the cross-beams 130 may be configured to partition the plurality of battery modules 200.

A plurality of cross-beams 130 may be provided. The cross-beam 130 may be configured to connect the side frame 120 and the center beam 140. For example, as shown in FIG. 5, the cross-beam 130 may be configured to connect the left wall and the right wall of the side frame 120 and the center beam 140. Therefore, the cross-beams 130 may be provided between the plurality of battery modules 200 arranged in four rows in the front-back direction to partition the battery modules 200.

In this case, the cross-beam 130 may be configured to protrude further upward than the battery cell 210. According to the above-implemented configuration of the present disclosure, since the cross-beam 130 is configured to extend further upward than the battery cell 210, the adjacent battery module 200 may be reliably separated by the cross-beam 130 to prevent thermal propagation.

The venting path P may be formed inside the cross-beam 130. The venting path P of the cross-beam 130 may be configured to communicate with at least one battery module 200. In this case, the venting hole 220a may be formed on the side surface of the module case 220 facing the cross-beam 130. The opening/closing member 230 may also be provided on the side surface of the module case 220 facing the cross-beam 130.

As a result, when the opening/closing member 230 is opened, the venting gas generated from the battery cell 210 may directly move to the venting path P formed inside the cross-beam 130 through the venting hole 220a.

Meanwhile, referring to FIG. 2, the pack case 100 may include a discharge portion 150. The discharge portion 150 may be configured to discharge the gas generated from the battery cell 210 to the outside of the pack case 100. For example, the venting gas of the venting path P may be discharged to the outside of the pack case 100 through the discharge portion 150.

The discharge portion 150 may be configured to open by the pressure of the venting gas when the internal pressure increases due to the venting gas generated inside the pack case 100, thereby discharging the venting gas to the outside of the pack case 100.

For example, the discharge portion 150 may be configured to be opened and closed depending on the internal pressure of the pack case 100. Alternatively, the discharge portion 150 may be configured in the form of a hole. Meanwhile, the present disclosure is not limited to a specific type or form of the discharge portion 150, and various discharge portions 150 known at the time of filing the present disclosure may be applied to configure the battery pack 10 of the present disclosure.

Specifically, the discharge portion 150 may be provided on the side surface of the pack case 100, that is, on the side frames 120. A plurality of discharge portions 150 may be provided. The discharge portion 150 may be provided on at least one of the plurality of side frames 120. Each discharge portion 150 may be formed on two or more side frames 120, or two or more discharge portions 150 may be formed on one side frame 120.

Meanwhile, the number of installations and locations of the discharge portions 150 described in the embodiment in FIG. 2 or the like are merely examples, and may vary.

Referring to FIG. 5, the venting path P may be formed inside the plurality of side frames 120. Accordingly, as indicated by the arrows in FIG. 5, the venting gas or the like generated inside the battery module 200 may move to the venting path P formed on the cross-beam 130 through the venting hole 220a and then to the venting path P formed in the side frame 212. This venting gas may be discharged to the outside of the pack case 100 through the discharge portion 150 provided in the side frame 120.

According to the above-mentioned implemented configuration of the present disclosure, since the venting gas or the like may directly move to the venting path P of the side frame 212 provided with the discharge portion 150, the venting gas or the like may be quickly discharged to the outside of the pack case 100.

Meanwhile, the battery pack 10 according to an embodiment of the present disclosure may further include a pack lid 300. The pack lid 300 may be coupled to the top of the side frames 120 to form the upper surface of the pack case 100.

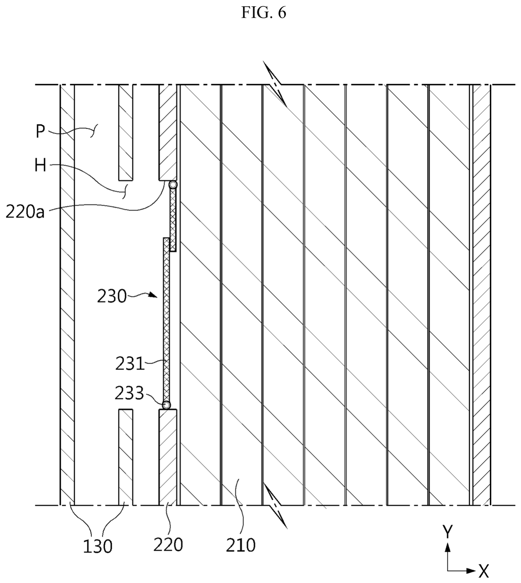

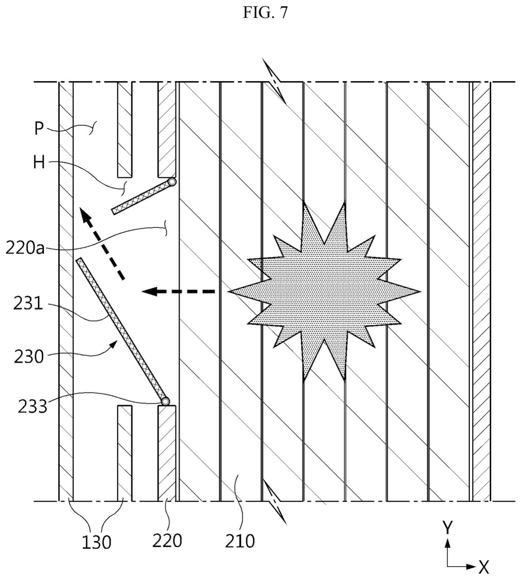

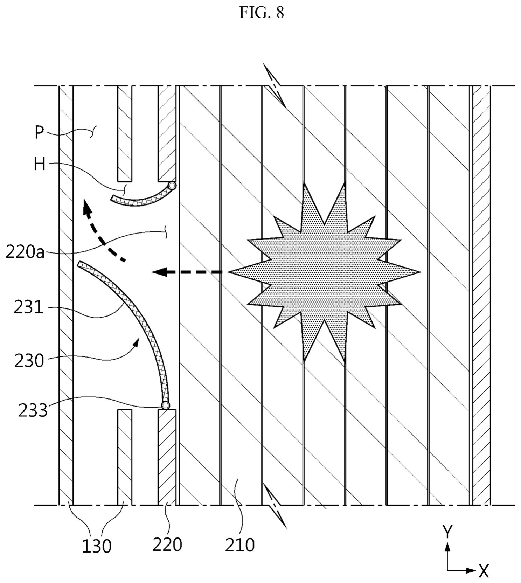

FIG. 6 is a partially cross-sectional view of a battery pack to which an opening/closing member is applied according to another embodiment of the present disclosure. FIG. 7 is a drawing illustrating an operation in which the opening/closing member is opened when a thermal event occurs in the battery pack in FIG. 6. In addition, FIG. 8 is a drawing illustrating an operation in which the opening/closing member is opened when a thermal event occurs in the battery pack in FIG. 6 according to another embodiment.

Referring to FIGS. 6 and 8, the opening/closing member 230 may include a cover plate 231 and a hinge 233.

The cover plate 231 may be configured to cover the venting hole 220a. The cover plate 231 may be provided in the module case 220. The cover plate 231 may be configured to open or close the venting hole 220a depending on the pressure of the venting gas due to the thermal runaway of the battery cell 210.

The cover plate 231 may be rotatably coupled to the venting hole 220a through the hinge 233. The hinge 233 may be coupled to the cover plate 231. The hinge 233 may have an elastic body to control the rotation of the cover plate 231. As an example, the elastic body may be a hinge spring.

Specifically, in the state where the thermal runaway does not occur in the battery cell 210, the cover plate 231 may maintain the closed state of the venting hole 220a by the elastic force of the elastic body provided in the hinge 233.

On the other hand, if the pressure rises above a reference pressure inside the battery module 200 due to the thermal runaway of the battery cell 210, the cover plate 231 may be opened toward the venting path P so as to discharge the venting gas and/or flame to the outside of the battery module 200. As described above, the state in which the pressure inside the battery module 200 is above the reference pressure may indicate that the pressure inside the battery module 200 is greater than the pressure of the venting path P due to the generation of the venting gas. In this case, the pressing force of the air inside the battery module 200 applied to the cover plate 231 by the venting gas may be higher than the elastic force of the hinge 233 that maintains the closed state of the cover plate 231.

According to the above-implemented configuration of the present disclosure, when a thermal event occurs in any battery module 200, the cover plate 231 may be opened by the pressure of the venting gas, so that the venting gas may be quickly discharged to the outside of the battery module 200 through the venting hole 220a.

When the opening/closing member 230 is opened by the pressure of the venting gas, the cover plate 231 may be configured to be opened at an acute angle with respect to the venting hole 220a. According to the above-implemented configuration of the present disclosure, the venting gas or the like released from the inside of the battery module 200 due to the thermal runaway of the battery cell 210 may be discharged to the venting path P along the inner surface of the cover plate 231 that is disposed at an angle with respect to the venting hole 220a. Accordingly, the flow of the venting gas or the like may be more reliably guided toward the venting path P.

In addition, the cover plate 231 may be configured to be opened only in one direction. In this case, the one direction may be defined as a direction toward the inside of the venting path P. More specifically, the cover plates 231 provided in the respective venting holes 220a may be configured to be opened only in a direction toward the inside of the venting path P. Accordingly, the direction in which the cover plate 231 provided in the venting hole 220a of the battery module 200, where the thermal event occurs, is opened may be configured to be opposite to the direction in which the cover plate 231 provided in the venting hole 220a of the adjacent battery module 200 is opened.

According to the above-implemented configuration of the present disclosure, the venting hole 220a provided in the battery module 200 in which the thermal event occurs and the venting hole 220a provided in another battery module 200 may be prevented from being opened simultaneously. As a result, the safety of the battery pack 10 may be enhanced by suppressing the movement of venting gas or heat to the battery cell 210 equipped in another battery module 200.

Furthermore, the cover plate 231 may be configured to close the battery module 200 when the venting gas is discharged to the outside and the pressure inside the battery module 200 drops below a reference pressure. The case where the pressure inside the battery module 200 is below the reference pressure may indicate that the pressure inside the battery module 200 is lower than the pressure of the venting path P after the venting gas is discharged to the outside. In this case, the elastic force of the hinge 233 that maintains the closed state of the cover plate 231 may be added to the pressure of the venting path P applied to the cover plate 231. Therefore, if the pressure inside the battery module 200 decreases after the venting gas is discharged to the outside, the cover plate 231 may be smoothly move toward the outside of the venting path P by the pressure difference between the inside of the battery module 200 and the venting path P, thereby closing the battery module 200.

According to the above-implemented configuration of the present disclosure, if the amount of venting gas discharged decreases, the battery module 200 may be easily closed by the cover plate 231, thereby reliably blocking the reverse inflow of venting gas and/or flame into the battery module 200. In addition, by blocking the inflow of oxygen into the battery module 200, additional ignition may be suppressed inside the battery module 200.

In addition, referring to FIGS. 7 and 8, the opening/closing member 230 may be configured to guide the venting gas in one direction of the venting path P when opened. That is, the opening/closing member 230 may be configured to be opened with directionality. The one direction may be defined as a direction toward the side frame 120.

According to the above-implemented configuration of the present disclosure, in the case where the venting path P is also formed in the side frame 120, the venting gas may quickly move to the venting path P formed in the side frame 120 to be discharged to the outside through the discharge portion 150. As a result, the heat accumulation inside the battery pack 10 may be effectively resolved.

Specifically, the opening/closing member 230 may include a plurality of cover plates 231. As an example, referring to FIG. 7, the plurality of cover plates 231 may be configured to have different lengths from each other. A longer cover plate 231 may block the venting gas from passing over the longer cover plate 231. In this case, the venting gas may be guided to move along the inner surface of the long cover plate 231. Accordingly, the different lengths of the cover plates 231 may more reliably guide the flow of the venting gas or the like toward the side frame 120 inside the venting path P.

As another embodiment, referring to FIG. 8, the cover plate 231 may be configured as an elastic body having elasticity. In this case, the plurality of cover plates 231 may be configured to have different elasticities. That is, the plurality of cover plates 231 may be configured to have different degrees of bending due to the venting gas. In this case, the plurality of cover plates 231 may be configured to have different open angles. A cover plate 231 having smaller elasticity may be opened at a smaller angle than other cover plates 231. As a result, the venting gas may be guided to move along the inner surface of the cover plate 231 having smaller elasticity. Accordingly, by controlling the elasticity of the cover plate 231, the flow of venting gas or the like may be more reliably guided toward the side frame 120 in the venting path P.

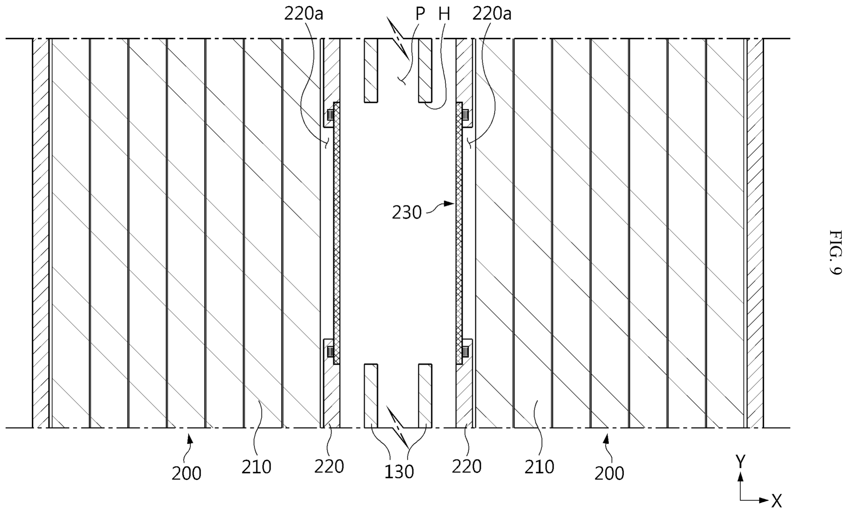

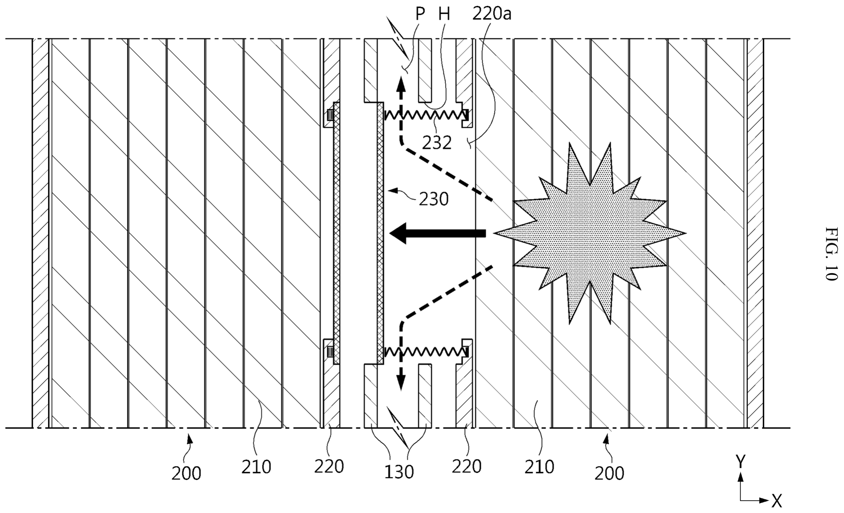

FIG. 9 is a partially cross-sectional view of a battery pack according to an embodiment of the present disclosure, and FIG. 10 is a drawing illustrating an operation in which the opening/closing member is opened when a thermal event occurs in the battery pack in FIG. 9.

Referring to FIG. 9, an inlet H may be formed in the pack case 100. The inlet H may be configured so that the venting gas discharged from the venting hole 220a flows into the venting path P. That is, the inlet H may be configured to connect the venting hole 220a and the venting path P. In this case, the inlet H may be provided so as to face the venting hole 220a. A plurality of inlets H may be provided.

As an example, a plurality of inlets H may be formed in one cross-beam 130. The plurality of inlets H may be provided in a staggered manner. That is, the plurality of inlets H may be provided so as not to face each other. Therefore, the venting gas introduced into the inlet H in one battery module 200 may not be directly discharged to other battery modules 200 through other inlets H.

Unlike the above embodiment, the inlets H may be provided so as to face each other in the pack case 100. That is, the inlet H formed on one battery module 200 and the inlet H formed on another battery module 200 may be configured to face each other in connection with each other.

In this case, when a thermal event occurs in any battery module 200, venting gas may flow into the adjacent battery module 200 through another inlet H. To prevent this, as illustrated in FIG. 10, the opening/closing member 230 may be configured to at least partially cover the inlet H formed on the adjacent battery module 200 when driven by the venting gas. That is, when the opening/closing member 230 is opened, the opening/closing member 230 may be configured to close the adjacent inlet H by passing through the inlet H.

According to the above embodiment of the present disclosure, the opening/closing member 230 may close other inlets H, thereby preventing the venting gas from flowing into the adjacent battery module 200 through other inlets H. Therefore, the thermal runaway propagation between the battery modules 200 may be more reliably suppressed or blocked.

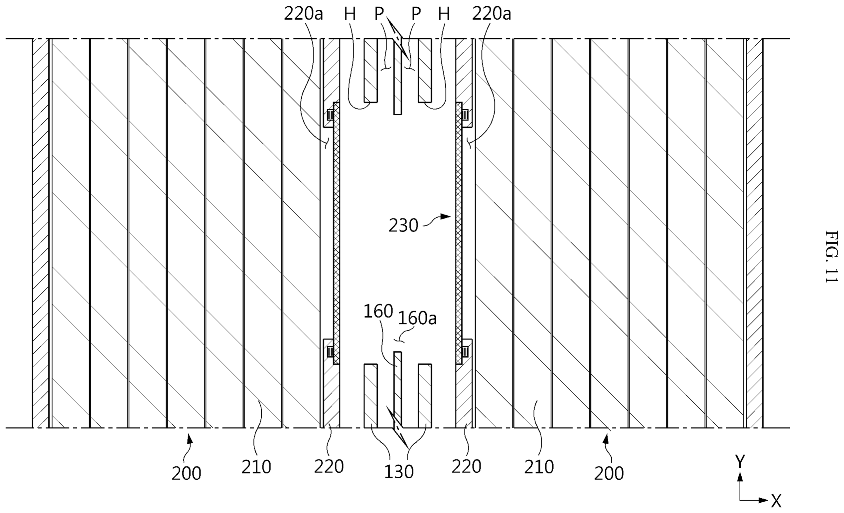

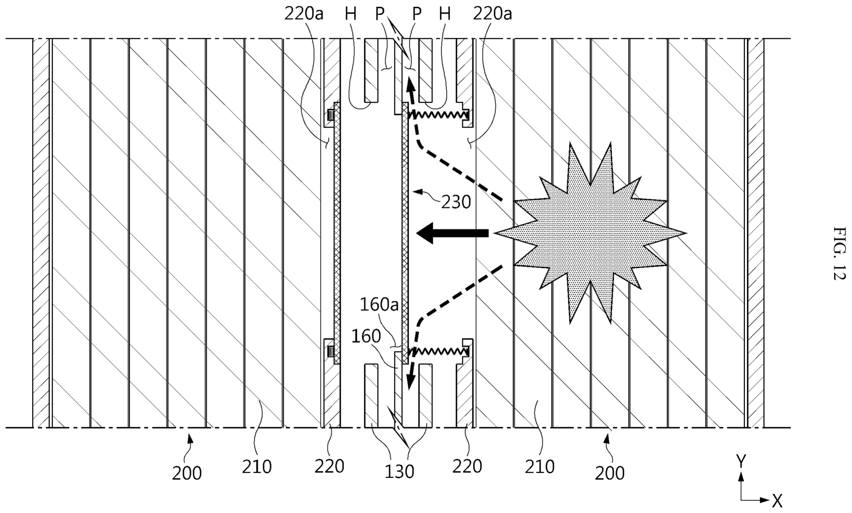

FIG. 11 is a partially cross-sectional view of a battery pack according to another embodiment of the present disclosure, and FIG. 12 is a drawing illustrating an operation in which the opening/closing member is opened when a thermal event occurs in the battery pack in FIG. 11.

According to another embodiment, as illustrated in FIG. 11, the pack case 100 may include a partition 160. The partition 160 may be configured to divide the venting path P inside the pack case 100 into a plurality of parts. The partition 160 may be configured to divide the venting path P in the horizontal direction. A partition hole 160a may be formed in the partition 160. In this case, the partition hole 160a may be configured to face the inlet H and/or the venting hole 220a.

As illustrated in FIG. 12, the opening/closing member 230 may be configured to cover the partition hole 160a when moved by the venting gas. That is, when the opening/closing member 230 is opened, the opening/closing member 230 may be configured to close the partition hole 160a by passing through the inlet H.

According to the above embodiment of the present disclosure, the opening/closing member 230 may close the partition hole 160a to prevent the venting gas from flowing into the adjacent battery module 200 through the partition hole 160a. Therefore, the thermal runaway propagation between the battery modules 200 may be more reliably suppressed or blocked.

Furthermore, when the opening/closing member 230 is opened, the partition 160 may be configured to act as a stopper. To this end, the partition hole 160a may be configured to be smaller than the inlet H. According to the above-implemented configuration of the present disclosure, the opening/closing member 230 may be prevented from moving over the partition 160. In addition, in the case where the opening/closing member 230 includes an elastic member 232, the elastic member 232 may be restricted from being infinitely stretched. As a result, the opening/closing member 230 may be configured to return when the discharge of the venting gas stops, thereby covering the venting hole 220a.

In addition, although not shown in the drawing, the partition 160 may be configured to be inclined inside the venting path P. In this case, the opening/closing member 230 may be configured to have directionality by the partition 160 when fully opened. According to the above-implemented configuration of the present disclosure, the venting gas may be guided in a desired direction by the opening/closing member 230 and the partition 160 and then quickly discharged to the outside of the pack case 100.

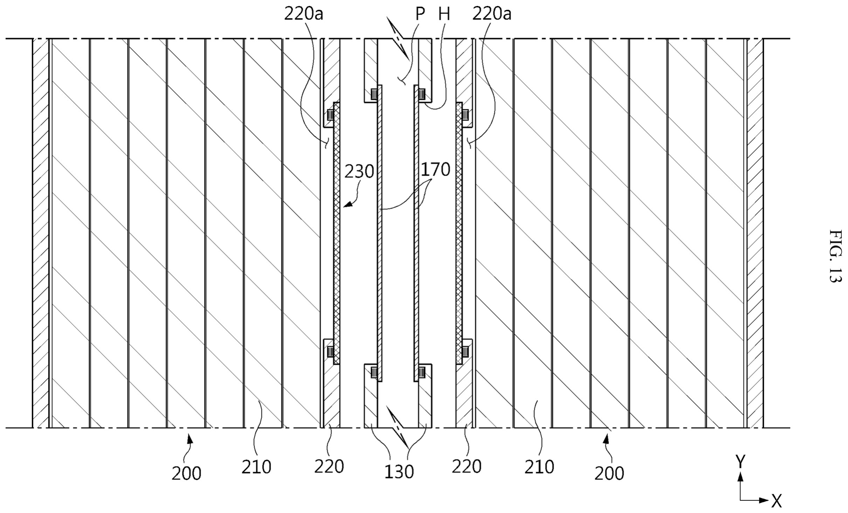

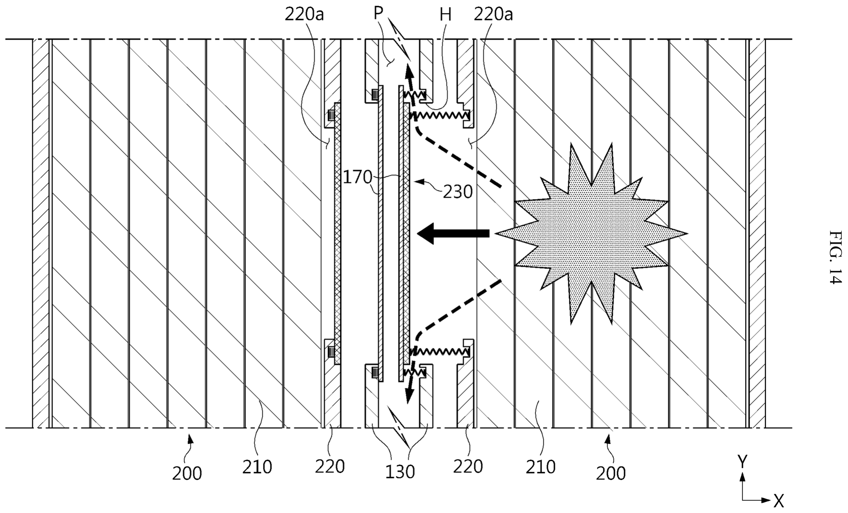

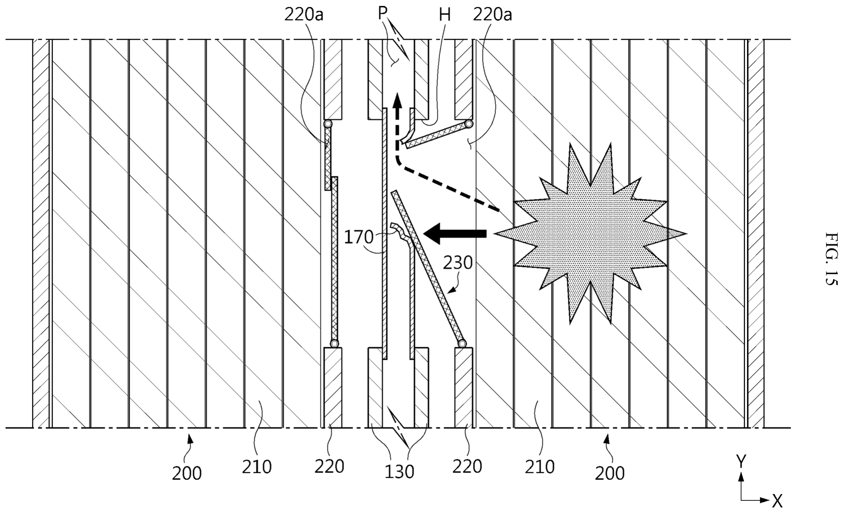

FIG. 13 is a partially cross-sectional view of a battery pack to which a cover member is applied according to an embodiment of the present disclosure. FIG. 14 is a drawing illustrating an operation in which the cover member is opened when a thermal event occurs in the battery pack in FIG. 13. In addition, FIG. 15 is a drawing illustrating an operation in which the cover member is opened when a thermal event occurs in the battery pack in FIG. 13 according to another embodiment.

In another embodiment, the pack case 100 may further include a cover member 170. The cover member 170 may be configured to cover the inlet H. The cover member 170 may be configured to open and close the inlet H. Specifically, the cover member 170 may be configured such that the inlet H is opened by the opening/closing member 230 when a thermal event occurs. That is, the cover member 170 may be configured to be opened by the opening/closing member 230 as the opening/closing member 230 is opened. Accordingly, the venting hole 220a, the inlet H, and the venting path P may be configured to be in communication.

As a result, only the inlet H provided on the battery module 200 where the thermal event occurs may be opened, and the inlet H provided on the adjacent other battery module 200 may remain in the closed state by the cover member 170. According to the above embodiment of the present disclosure, the cover member 170 may close the inlet H, thereby preventing the venting gas from flowing into the adjacent other battery module 200 through the inlet H. Therefore, the thermal runaway propagation between the battery modules 200 may be more reliably suppressed or blocked.

Referring to FIG. 14, the cover member 170 may be configured to be at least partially movable by the opening/closing member 230. The cover member 170 may be configured to move together with the opening/closing member 230 as the opening/closing member 230 is opened. In particular, the opening/closing member 230 may be configured to push the cover member 170. That is, the opening/closing member 230 may be configured to pressurize the cover member 170. Accordingly, the cover member 170 may be moved entirely, or a part of the opening/closing member 230 may be moved.

The cover member 170 may move toward the inside of the venting path P. Specifically, the cover member 170 may move into the venting path P by the pressurizing force of the venting gas discharged through the venting hole 220a provided in the battery module 200 where a thermal event occurs.

Referring to FIG. 15, the cover member 170 may be configured to be ruptured by the opening/closing member 230. That is, the cover member 170 may be configured to be ruptured by the opening/closing member 230. In particular, the opening/closing member 230 may be configured to be opened so that the distal end of the opening/closing member 230 ruptures the cover member 170. As a result, the venting gas may flow into the venting path P through the gap generated by the rupture of the cover member 170.

In this case, the cover member 170 may be formed of a thin film that is easily ruptured. In addition, a notch may be formed in the cover member 170. Therefore, when a thermal event occurs, it may be easily ruptured by the opening/closing member 230 opened by the venting gas.

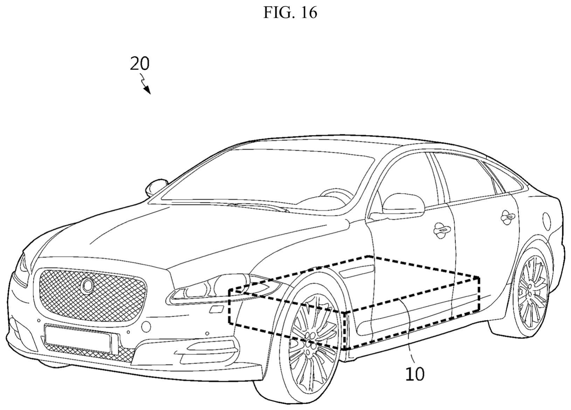

FIG. 16 is a schematically perspective view of a vehicle including a battery pack according to an embodiment of the present disclosure.

Referring to FIG. 16, a vehicle 20 according to an embodiment of the present disclosure may include one or more battery packs 10 according to an embodiment of the present disclosure. The vehicle 20 according to the present disclosure may be, for example, an electric vehicle, a hybrid vehicle, or a plug-in hybrid vehicle. The vehicle 20 includes a four-wheel vehicle and a two-wheel vehicle. The vehicle 20 may be operated by power supplied from the battery pack 10 according to an embodiment of the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery pack comprising:
a pack case having an inner space formed therein and a venting path formed to communicate the inner space and the outer space; and
a battery module accommodated in the inner space of the pack case and comprising a plurality of battery cells, a module case configured to accommodate the plurality of battery cells and having a venting hole formed to discharge venting gas generated from the battery cell to the outside, and an opening/closing member configured to open and close the venting hole and cause the venting hole to communicate with the venting path when opened.

2. The battery pack according to claim 1,
wherein the opening/closing member is configured to cover the venting hole, and
wherein the venting hole is opened by the venting gas.

3. The battery pack according to claim 1,
wherein at least a portion of the opening/closing member is configured to be movable toward an inside of the venting path by the venting gas.

4. The battery pack according to claim 1,
wherein the pack case comprises a cross-beam configured to partition the inner space and having the venting path formed therein.

5. The battery pack according to claim 4,
wherein the opening/closing member is provided on a side surface of the module case facing the cross-beam.

6. The battery pack according to claim 1,
wherein the opening/closing member is configured to guide the venting gas in one direction of the venting path when opened.

7. The battery pack according to claim 3,
wherein the pack case has a plurality of inlets formed to face the venting hole and configured so that the venting gas flows into the venting path.

8. The battery pack according to claim 7,
wherein the opening/closing member is configured to at least partially cover an inlet formed on another battery module when moved.

9. The battery pack according to claim 3,
wherein the pack case comprises a partition configured to partition the venting path into a plurality of parts and having a partition hole formed thereon, and
wherein the opening/closing member is configured to cover the partition hole when moved.

10. The battery pack according to claim 7,
wherein the pack case further comprises a cover member configured to cover the inlet and to cause the inlet to be opened by the opening/closing member.

11. The battery pack according to claim 10,
wherein the cover member is configured to be movable by the opening/closing member.

12. The battery pack according to claim 10,
wherein the cover member is configured to be broken by the opening/closing member.

13. A vehicle comprising a battery pack according to any one of claims 1 to 12.
